# EUROPEAN PATENT APPLICATION

(11) **EP 2 009 547 A2**
(43) Date of publication of application: **31.12.2008**
(21) Application number: 08251060.3
(22) Date of filing: 26.03.2008
(51) Int. Cl.: G06F 9/45, G06F 9/46, G06F 17/30

(54) **Method and apparatus for parallel XSL transformation with low contention and load balancing**

(30) Priority: 26.06.2007 US 819217
(71) Applicant: Intel Corporation, Santa Clara, CA 95052 (US)
(72) Inventor: Sun, Yuanbao, Shanghai 20030 PRC (CN); Zhang, Qi, Shanghai 200432 (CN); Li Tianyou, Shanghai 200432 (CN); Kalekin Udi, Santa Clara, CA 95054 (US); Tsoi, Howard, Santa Clara, CA 95054 (US); Cahoon Brendon, Austin Texas 78757 (US)
(74) Representative: Beresford, Keith Denis Lewis

(57) **Abstract**

A method for parallel transformation of an XML document by a plurality of execution modules and the serialization of output according to semantic order of the XML document.

## Description

### BACKGROUND OF THE INVENTION

XML Stylesheet Language Transformation (XSLT) has become one of the most popular languages for processing and/or transforming XML documents in various application domains.

Extensible stylesheet language transformation (XSLT) is a language for transforming Extensible Markup Language (XML) documents into other documents. An XSLT processor typically requires as inputs an Extensible Stylesheet Language (XSL) document and an input XML document. Using definitions in the XSL document, an XSLT processor may transform the input XML document into another document. The format of the resulting output document may be in XML or another format. For example, the resulting document may be formatted according to hypertext markup language (HTML) or it may be a plain text document. XSLT does not typically enforce any execution order, namely, the instructions performed by an XSLT processor during the processing of an input XML document may be performed in any arbitrary order. However, executing XSLT may be costly in terms of time, memory and computing resources.

### BRIEF DESCRIPTION OF THE DRAWINGS

Embodiments of the invention are illustrated by way of example and not limitation in the figures of the accompanying drawings, in which like reference numerals indicate corresponding, analogous or similar elements, and in which:
**FIG. 1** shows an exemplary block diagram according to some embodiments of the invention;
**FIG. 2** shows an exemplary hierarchy of task creation according to some embodiments of the invention and an exemplary stack according to some embodiments of the invention;
**FIG. 3** shows exemplary manipulations of output builders according to some embodiments of the invention; and
**FIG. 4** shows exemplary pseudo code according to some embodiments of the invention.

It will be appreciated that for simplicity and clarity of illustration, elements shown in the figures have not necessarily been drawn to scale. For example, the dimensions of some of the elements may be exaggerated relative to other elements for clarity.

### DETAILED DESCRIPTION OF EMBODIMENTS OF THE INVENTION

In the following detailed description, numerous specific details are set forth in order to provide a thorough understanding of embodiments of the invention. However it will be understood by those of ordinary skill in the art that the embodiments of the invention may be practiced without these specific details. In other instances, well-known methods, procedures, components and circuits have not been described in detail so as not to obscure the embodiments of the invention.

A data process is here, and generally, considered to be a self-consistent sequence of acts or operations on data leading to a desired result. These include physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers or the like. It should be understood, however, that all of these and similar terms are to be associated with the appropriate physical quantities and are merely convenient labels applied to these quantities.

Unless specifically stated otherwise, as apparent from the following discussions, it is appreciated that throughout the specification discussions utilizing terms such as "processing," "computing," "calculating," "determining," or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs), electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the invention as described herein.

Unless explicitly stated, the method embodiments described herein are not constrained to a particular order or sequence. Additionally, some of the described method embodiments or elements thereof can occur or be performed at the same point in time.

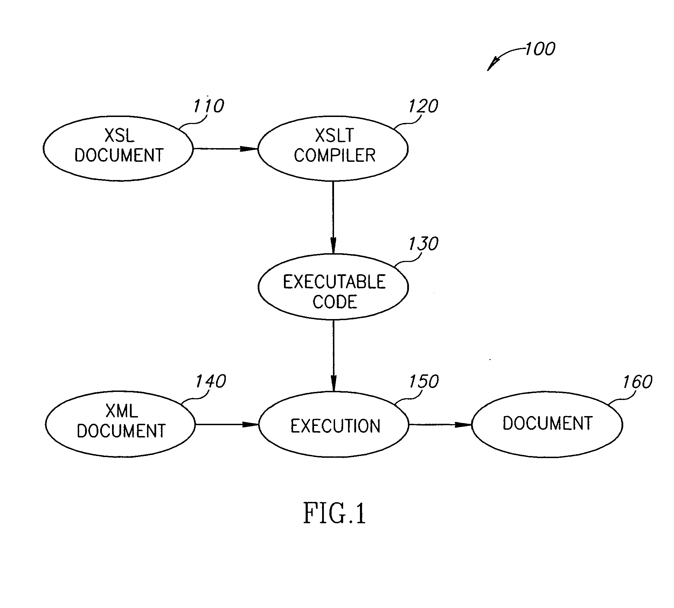

According to embodiments of the invention, parallel XSLT transformation may reduce time and memory consumption as well as possibly increase utilization of computing resources. Reference is now made to **Fig. 1** showing an exemplary flow according to embodiments of the invention. XSL document **110** may be used as input to XSLT compiler **120.** Compiler **120** may produce executable computer code **130** based on XSL document **110.** XML document **140** may be used as input to execution **150** which may be an executable instantiation of code **130.** Output document **160** may be the output of execution **150.** According to some embodiments of the invention, execution **150** may comprise a plurality of execution modules.

In some embodiments of the invention, compiler **120** may parse input XSL document **110** and may further identify instructions, or groups of instructions, that may be combined together and executed separately from other instructions, for example, as a single task. A task may comprise a set of instructions which may be executed separately, and independently from other instructions comprising document **110.** Tasks may be executed simultaneously, in parallel, by multiple execution modules, e.g., by multiple threads of execution, or multiple, suitable, hardware modules. Compiler **120** may further insert executable code into code **130** to transform instructions, or groups of instructions into separate tasks. In some embodiments of the invention, compiler **120** may detect or identify such separable or autonomous instructions and insert code into code **130** to transform these autonomous instructions into separate tasks.

Autonomous instructions may be instructions that do not rely on variables defined outside the code of those instructions, and may further have no flow dependency on other instructions. An example of flow dependency may be the dependence of an instruction on output, or execution, of another instruction. For example, instruction X may require as input the output of instruction Y. Accordingly, executing instructions X and Y as independent tasks may result in both tasks, and consequently, both instructions, being executed at the same time, for example, by two different threads running at the same time, or two different hardware modules executing instructions X and Y simultaneously. However, because the output of instruction Y may be incomplete or unavailable before execution of instruction Y is completed, instruction X may be provided with invalid or incorrect input. Accordingly, instructions X and Y may be considered to be dependent, and not autonomous with respect to each other. It will be noted that instructions X and Y may be autonomous with respect to other instructions.

Another example of dependency may be where instruction A relies on a variable, for example C, that may be modified by a previous instruction, for example instruction B. Accordingly, in such case, if instructions A and B where to be transformed into two separate tasks, then executing the two tasks independently, for example by two separate execution modules, then execution of instruction A may be provided with an incorrect variable C.

According to embodiments of the invention, a mechanism is provided to ensure that dependent instructions are executed in suitable order. For example, embodiments of the present invention may require that instruction Y be executed before instruction X, or that the task executing instruction B completes its execution before the task executing instruction A begins execution.

Examples of autonomous instructions may be XSL instructions, such as but not limited to xsl:for-each and xsl:apply-templates, which may iterate over nodes in a node-set or node sequence of an XML document, and may further perform some instructions on each node. Because these instructions may be independent of each other, they may be transformed into tasks that may be executed independently, and possibly simultaneously. In addition to XSL instructions known in advance to be autonomous, such as, for example, xsl:for-each and xsl:apply-templates mentioned above, compiler **120** may parse or examine document **110,** locate instructions, and may further check these instructions for characteristics such as but not limited to, flow dependencies and/or variable dependencies. Depending on such characteristics, compiler **120** may group one or more instructions into a single task. For example, if some dependencies may be identified between several instructions, these several instructions may be grouped into a single task. For example, in the case of a number of instructions using the same variables, compiler **120** may group these instructions with the variables' definitions into one task.

In some embodiments of the invention, tasks may be nested. For example, a task may be created from within another task. For example, a xsl:apply-templates instruction appearing inside a xsl:for-each instruction may create tasks for the xsl:apply-templates instruction which will be created from within tasks which may be created for the xsl:for-each instruction. In addition to inserting code for the creation of tasks which may be executed simultaneously, in parallel, by different execution modules, compiler **120** may also create continuation tasks. A continuation task may perform actions, such as but not limited to, releasing memory allocated, manipulating a heap, releasing pointers or any other, possibly sequential actions which may be required. For example, memory may be allocated for a template when an xsl:apply-templates instruction is first met, and context may need to be saved as well. The xsl:apply-templates construct may be transformed into multiple tasks, which may in turn be executed by different execution modules; however, memory allocated may need to be released and context saved may need to be restored. Accordingly, such actions may be done by a continuation task which may be executed after tasks implementing the xsl:apply-templates construct have terminated. A global continuation task may be created for executing instructions which were not grouped into any task as well as other actions required. A global continuation task may perform actions such as, for example, freeing memory allocated, restoring context, releasing pointers, and/or restoring a heap, as well as possibly executing instructions which were not grouped into any task. Compiler 120 may elect to leave one or more instructions in a global continuation task, for example, light-weight instructions for which the overhead of task creation may be relatively high. The global continuation task may be the last task to execute.

In some embodiments of the invention, transforming an XML document may be performed by a plurality of execution modules. According to embodiments of the invention, the number of execution modules may be any suitable number, for example, to provide scaleability. For example, the number of threads may be the number of processors of a multi-processor platform, or it may be any suitable number, for example, a number suitable for a specific multi-tasking operating system environment. In other embodiments of the invention, the code produced by compiler **120** may be embedded in hardware, in which case, the number of execution hardware modules may be chosen according to suitable considerations.

In some embodiments of the invention, an execution module may own or otherwise be associated with, a task stack. A task stack may contain one or a plurality of tasks to be executed. An execution module may place tasks for execution in its stack, for example, tasks created by an execution module may be placed in a stack associated with the execution module. An execution module may retrieve tasks from a stack. For example, an execution module may retrieve tasks from a stack associated with it and execute them. According to some embodiments of the invention, an execution module may retrieve tasks from a task stack of another execution module. For example, an idle execution module may scan the stacks of other execution modules and based on such scanning, may retrieve tasks for it to execute. The decision of which stack to retrieve tasks from may be made, for example, based on a stack containing more than a predefined number of tasks, or another parameter. In such case, the execution module may retrieve one or more tasks from that stack of another execution module, for example, half of the tasks may be retrieved. The execution module may further place the retrieved tasks in its own stack, and further, retrieve these tasks from its stack and execute them. The ability of execution modules, in particular, idle execution modules, to retrieve tasks from stacks of other execution modules may enable load balanced execution, since the load of executing tasks may be shared by, or balanced across, a plurality of execution modules.

According to some embodiments of the invention, when an execution module executes code for creation of tasks, the execution module may create multiple tasks and a continuation task associated therewith. The execution module may further place the continuation task, and the tasks created, in its stack in reverse order. For example, an xsl:for-each construct which iterates N nodes may yield N tasks. In such case, an execution module may create N tasks, each of which possibly implementing an iteration of the xsl:for-each construct, as well as a continuation task. The continuation task may be placed first in the stack, followed by the first task, then the second task, and so on, and the Nth task may be placed last in the stack. According to embodiments of the invention, when an execution module retrieves tasks from its task stack, it may retrieve the last task placed in the stack first, e.g., in the example above, the Nth task may be retrieved first, possibly followed by the (N-1)th task, and so on. The continuation task may be retrieved and executed last or after the multiple associated tasks. For example, in the case of iterative tasks, e.g., xsl:for-each and xsl:apply-templates, the continuation task may be retrieved and executed after all multiple associated tasks comprising the iterations have been executed.

According to embodiments of the invention, in some circumstances, an execution module may refrain from retrieving certain tasks from stacks associated with other execution modules. For example, in some embodiments of the invention, an execution module may refrain from taking a continuation task from the stack of another execution module, thereby ensuring that execution of continuation tasks may remain for execution by the execution module that created them. Leaving execution of continuation tasks to the execution module that created them may serve to reduce execution overhead and increase execution locality. A continuation task may have context associated with it in the form of, for example, initialized variables, initialized pointers, allocated memory and the like. Allowing execution modules to retrieve continuation tasks may entail copying of context, which may be costly. In addition, allowing the execution module that created the continuation task to execute it may increase locality of code execution, which may be desirable in order to increase processor cache hits, thereby increasing efficiency by reuse of variables, data, and/or instructions stored in processor cache.

Since a continuation task may typically be executed after all other tasks associated with it have been executed, a counter may be associated with a continuation task, where the value of the counter may reflect the number of tasks needed to be executed before the continuation task may be executed. This counter may be initialized with the number of associated tasks upon creation of the continuation tasks and associated tasks. This counter may further be decreased for each associated task executed. In some embodiments of the invention, an execution module may verify the counter value is zero before executing the continuation task.

According to embodiments of the invention, an execution module may retrieve more than one task from a stack of another execution module. For example, an execution module may retrieve a consecutive set of tasks, for example, half of the tasks, in a stack of another execution module, and may further place the retrieved tasks in its own stack for execution. According to embodiments of the present invention, retrieving a set of consecutive tasks may serve to increase execution code locality, and hence, efficiency, for example, due to the fact that multiple consecutive tasks retrieved may call for the same code to be executed, possibly increasing processor cache hits.

According to some embodiments of the invention, an execution module retrieving tasks from another execution module's stack may retrieve tasks from the bottom of the stack, namely, the tasks which may otherwise be executed last by the execution module that owns the stack. Retrieving tasks from the bottom of the stack may increase code locality of the execution module who owns the stack since adjacent tasks in the stack may be likely to be sharing the same execution code, and since the owner of the stack may be executing tasks from the top of the stack. In addition, retrieving multiple tasks may reduce the number of times execution modules may need to retrieve tasks from stacks of other execution modules, thus possibly reducing overhead associated with the move of tasks from stack to stack. Contention may also be decreased by retrieval of multiple tasks which may in turn lower the number of retrieves, since execution modules may be less likely to compete for the same tasks when the number of retrieve attempts is low.

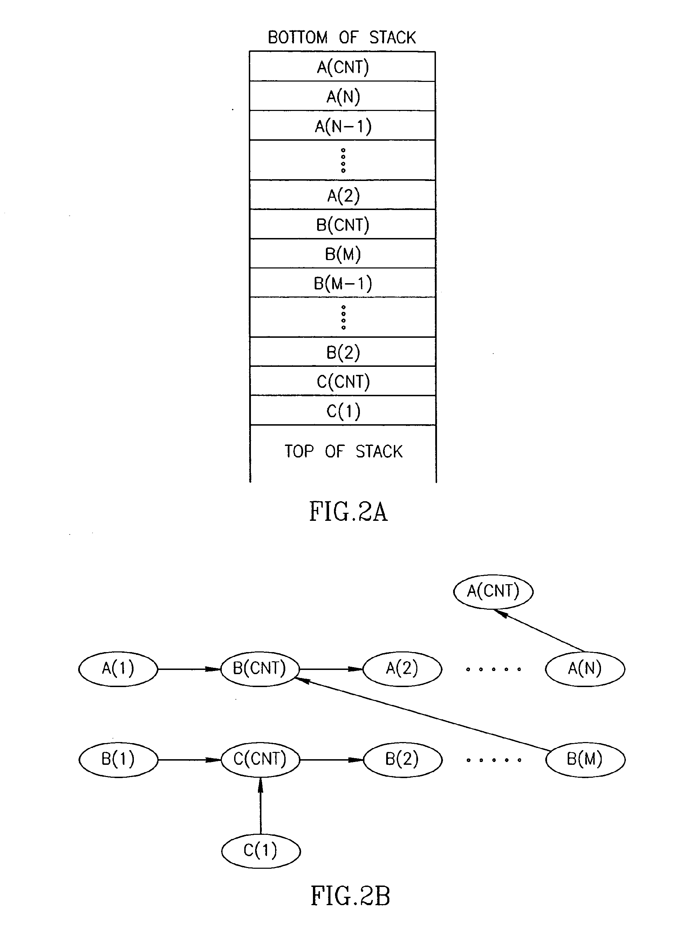

Reference is now made to **Fig. 2A** showing a task stack according to embodiments of the present invention and **Fig. 2B** showing an example of task creation hierarchy according to embodiments of the present invention. Such hierarchy and stack may be the result of an execution module executing code which calls for the creation of multiple tasks, for example, an xsl:for-each construct which iterates over n nodes. The execution module may create n tasks A(1) to A(n) and a continuation task, A(cnt). The execution module may further place tasks A(1) to A(n), and a continuation task, A(cnt) in its task stack. The execution module may further retrieve task A(1) and execute it. However, task A(1) may contain an xsl:for-each construct which iterates over m nodes as well as code calling for the creation of m tasks implementing the xsl:for-each construct. The execution module may create m tasks B(1) to B(m) and a continuation task B(cnt). The execution module may further place tasks B(1) to B(m), and a continuation task, B(cnt) in its task stack. The execution module may further retrieve task B(1) and begin to execute it. Task B(1) may contain code calling for the creation of another task as shown by task C(1) and its continuation task C(cnt). **Fig. 2A** shows how created tasks under the above scenario may be placed in a task stack. As shown, tasks may be placed in a stack in reverse order, namely, tasks created last may be executed first, and further, continuation tasks may be executed after all other tasks with which they may be associated have been extracted from the stack. The execution module owning the stack may retrieve tasks from the top of the stack while other execution module may retrieve tasks from the bottom of the stack.

According to the World Wide Web Consortium (W3C) XSLT specification, each XSLT instruction is executed in an implicit dynamic context. That context may include the context node, parameter and variable bindings, namespaces in scope and so on, as well as implementation-specific context information. When an execution module creates a set of tasks, it may not need to copy the context information. Instead, the execution module may create a reference to the context and encapsulate this reference into the task. The context may be copied if another execution module retrieves the task. If the creating execution module is the one executing the task then the context need not be copied, insofar as the creating execution module may have this context in its memory.

In addition to implicit dynamic context, execution of XSLT instructions may depend on the content of, for example, XPath and/or variables. According to XSLT specifications, a variable content as well as XPath may be computed by a sequence of XSLT instructions that may, in turn, contain complex instructions, as well as calls to the operating system, such as "document ()" to open a file. Such calls and computations may suspend the execution of an execution module. For example, accessing an external device may suspend execution until the access operation is complete. According to embodiments of the present invention, compiler **120** may detect such scenarios. Compiler **120** may create separate tasks for instructions which may suspend execution and may further create a special synchronized continuation task. A synchronized continuation task may depend on variables or XPath which may be computed by other tasks. When a synchronized continuation task is due for execution it may be extracted from the stack, but instead of being executed, an associated counter may be checked. This associated counter may be decreased for each task associated with the synchronized continuation task which completes execution, and when the associated counter value reaches zero, the synchronized continuation task may be executed.

Parallel transformation of an XML document as described above may require output serialization. For example, the output of multiple execution modules may need to be combined together in order to construct output document **160.** Combining multiple outputs of multiple execution modules may entail ordering the outputs, for example, according to input document **110.** According to some embodiments of the invention, each execution module may have output objects associated with it. An execution module may designate an output object as the current output object and may further direct its output to the current output object. An execution module retrieving tasks from another execution module's stack may create a copy of the other execution module's current output object, and may further link the newly created output object to the current output object of the execution module owning the stack from which tasks were retrieved. The execution module may further designate the newly created output object as its current output object and direct output to it. As described above, tasks may be nested within tasks, such that when an execution module retrieves tasks from another execution module's stack, it may determine whether the tasks retrieved are in the same level of nesting as the tasks executed by the execution module owning the stack or by another execution module that may have also retrieved tasks from that stack. If the nesting level is not the same, the execution module may create a task barrier. A task barrier may be used in order to group output of nesting levels.

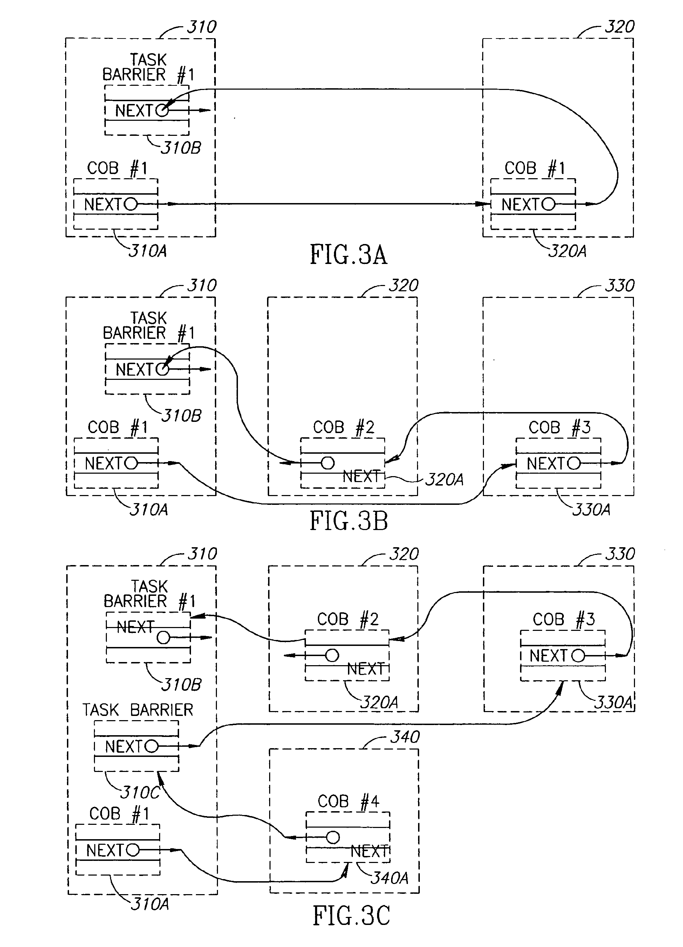

A serialization process may comprise traversing the output objects list according to the links between them, and collecting the data associated with them. The task barriers may be used by a serialization process in order to identify the output of nesting levels. Reference is now made to **Fig. 3A, Fig. 3B** and **Fig. 3C** showing an example of output objects and task barriers created according to some embodiments of the present invention.

In **Fig. 3A****,** execution module **310** may have a stack containing tasks. Output object **310A** may be the current output object of execution module **310.** Execution module **320** may have retrieved tasks from the stack of execution module **310.** Execution module **320** may have created task barrier **310B.** Execution module **320** may have further copied output object **310A** to output object **320A** and may have further designated output object **320A** as its current output object. Execution module **320** may have further linked output object **320A** to output object **310A** and to task barrier **310B.**

In **Fig. 3B****,** execution module **330** may have retrieved tasks from the stack of execution module **310.** Execution module **330** may have further copied output object **310A** to output object **330A** and may have further designated output object **330A** as its current output object. Execution module **330** may have uncoupled the link between output object **320A** and output object **310A.** Execution module **330** may have further linked output object 330A to output object **310A** and linked output object **330A** to output object **320A.**

In **Fig. 3C****,** execution module **340** may have retrieved tasks from the stack of execution module **310.** Execution module **340** may have detected that the nesting level of the tasks it retrieved is different from the nesting level of the tasks retrieved by execution module **320** and execution module **330.** Accordingly, execution module **340** may have created task barrier **310C.** Execution module **340** may have copied output object **310A** to output object **340A.** Execution module **340** may have further uncoupled the link between output object **330A** and output object **310A.** Execution module **340** may have further linked output **310A** to output object **340A,** execution module **340** may have further linked output object **340A** to task barrier **310C.** Execution module **340** may have further linked task barrier **310C** to output object **330A.**

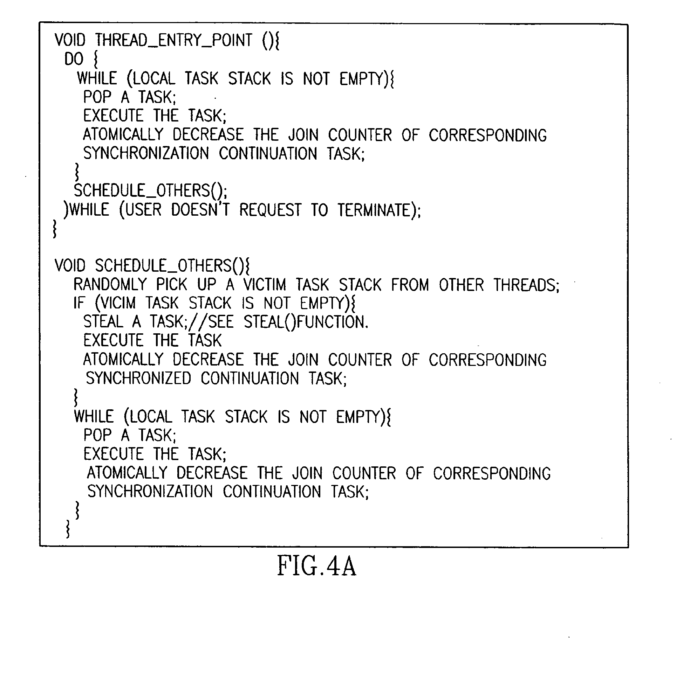

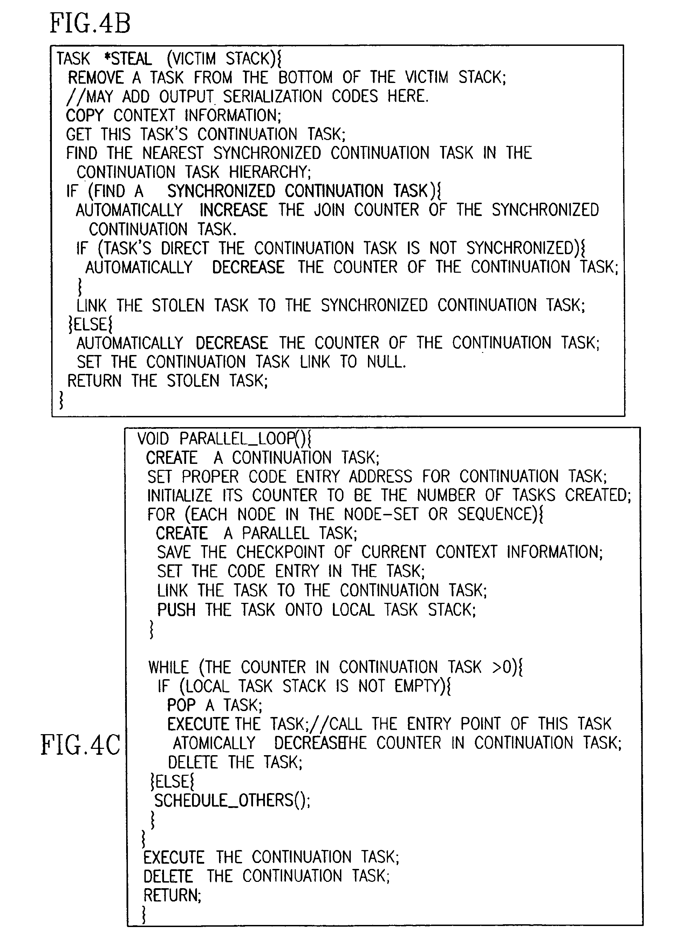

Reference is now made to **Fig. 4** showing exemplary pseudo codes which implement some components of embodiments of the invention. **Fig. 4A** shows exemplary pseudo code implementing the main loop of an execution module. As shown, an execution module may continue to retrieve tasks from its own stack, and if the execution module's stack is empty, it may scan other execution modules' stacks. If tasks are found in another execution module's stack, the execution module may retrieve some of them, place them in its own stack and execute them. It should be noted that not all procedures or details are shown by the pseudo code depicted in Fig. 4A. In addition, it should be noted that although a single task may be retrieved by the pseudo code shown, the number of tasks retrieved may be predefined or dynamically computed by an execution module. **Fig. 4B** shows exemplary pseudo code implementing retrieval of tasks from another execution module's stack. **Fig. 4C** shows exemplary pseudo code implementing creation of multiple tasks from an xsl:apply-templates construct or a xsl:for-each construct, as well as execution of the tasks created.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the spirit of the invention.

## Claims

1. A method comprising:
producing an executable code such that said code when executed transforms instructions in an Extensible Stylesheet Language (XSL) document into tasks and executes said tasks;
executing concurrently by a plurality of execution modules said executable code, wherein an XML document is provided as input, and wherein each execution module executes said executable code; and
producing one or more output documents from outputs of said execution modules.

2. The method of claim 1, wherein said execution modules are threads of execution.

3. The method of claim 1, wherein said execution modules are hardware modules.

4. The method of claim 1, wherein producing said executable code comprises:
locating xsl:for-each and xsl:apply-templates instructions in said XSL document, and
producing said executable code such that said code when executed transforms each of said located xsl:for-each and xsl:apply-templates instructions into a plurality of tasks.

5. The method of claim 1, wherein producing said executable code comprises:
locating autonomous instructions in said XSL document, and
producing said executable code such that said code when executed transforms said located autonomous instructions into one or more tasks.

6. The method of claim 1, wherein at least some of said tasks when executed create additional tasks.

7. The method of claim 1, wherein said plurality of execution modules comprise:
a first execution module to place tasks in a first stack, and to further retrieve for execution a task from a top of said first stack; and
a second execution module to retrieve tasks from a bottom of said first stack, to place said retrieved tasks in a second stack, and to retrieve for execution a task from a top of said second stack.

8. The method of claim 7, wherein said execution modules distribute execution of said tasks among said execution modules based on at least one load balancing parameter.

9. The method of claim 7, wherein said first and second execution modules direct execution output to respective first and second output objects, wherein second output objects produced based on tasks retrieved from said first stack are linked to first output objects, and wherein producing said output document comprises collecting output from said first and second output objects according to said linking.

10. An article of manufacture for use in a computer system, the article of manufacture comprising a computer usable medium having computer readable program code means embodied in the medium, the program code including computer readable program code that when executed causes a computer to:
produce an executable code such that said code when executed transforms instructions in an Extensible Stylesheet Language (XSL) document into tasks and executes said tasks;
execute simultaneously by a plurality of execution modules said executable code, wherein an XML document is provided as input, and wherein each execution module executes said executable code; and
produce an output document from outputs of said execution modules.

11. The article of claim 10, wherein the computer readable program- code when executed causes a computer to produce said executable code by:
locating xsl:for-each and xsl:apply-templates instructions in said XSL document, and
producing said executable code such that said code when executed transforms each of said located xsl:for-each and xsl:apply-templates instructions into a plurality of tasks.

12. The article of claim 10, wherein the computer readable program code when executed causes a computer to produce said executable code by:
locating autonomous instructions in said XSL document, and
producing said executable code such that said code when executed transforms said located autonomous instructions into one or more tasks.

13. The article of claim 10, wherein at least some of said tasks when executed create additional tasks.

14. The article of claim 10 wherein said plurality of execution modules comprise:
a first execution module to place tasks in a first stack, and to further retrieve for execution a task from a top of said first stack; and
a second execution module to retrieve tasks from a bottom of said first stack, to place said retrieved tasks in a second stack, and to retrieve for execution a task from a top of said second stack.

15. The article of claim 14, wherein said first and second execution modules direct execution output to respective first and second output objects, wherein second output objects produced based on tasks retrieved from said first stack are linked to first output objects, and wherein producing said output document comprises collecting output from said first and second output objects according to said linking.
